(19) Europäisches Patentamt
European Patent Office
Office européen des brevets

(11) Veröffentlichungsnummer: **0 229 312**
**A2**

(12) # EUROPÄISCHE PATENTANMELDUNG

(21) Anmeldenummer: **86117103.1**

(51) Int. Cl.⁴: **H01M 14/00**

(22) Anmeldetag: **09.12.86**

(30) Priorität: **12.12.85 LU 86208**

(43) Veröffentlichungstag der Anmeldung:
**22.07.87 Patentblatt 87/30**

(84) Benannte Vertragsstaaten:
**DE FR GB**

(71) Anmelder: **COMMUNAUTE EUROPEENNE DE L'ENERGIE ATOMIQUE (EURATOM)**
**Bâtiment Jean Monnet Plateau du Kirchberg**
**Boîte Postale 1907**
**L-1019 Luxembourg(LU)**

(72) Erfinder: **Angeletti, Livio Mario**
**4,All e du Bas Vaup reux**
**F-91370 Verri res-Le Buisson(FR)**

(74) Vertreter: **Weinmiller, Jürgen**
**Lennéstrasse 9 Postfach 24**
**D-8133 Feldafing(DE)**

(54) **Verfahren zur Speicherung von elektrischer Energie in einem photochemischen Element.**

(57) Photochemisches Element und Verfahren zur Speicherung von elektrischer Energie, bei dem ein Metallhalogenid unter Energiezufuhr aufgespalten wird und die Spaltprodukte wiedervereinigt werden unter Abgabe von elektrischer Energie, wobei die Aufspaltung des Metallhalogenids durch Bestrahlung in einer wässrigen konzentrierten Mineralsäurelösung in Gegenwart eines Katalysators mit Sonnenlicht oder Nuklearstrahlung erfolgt.

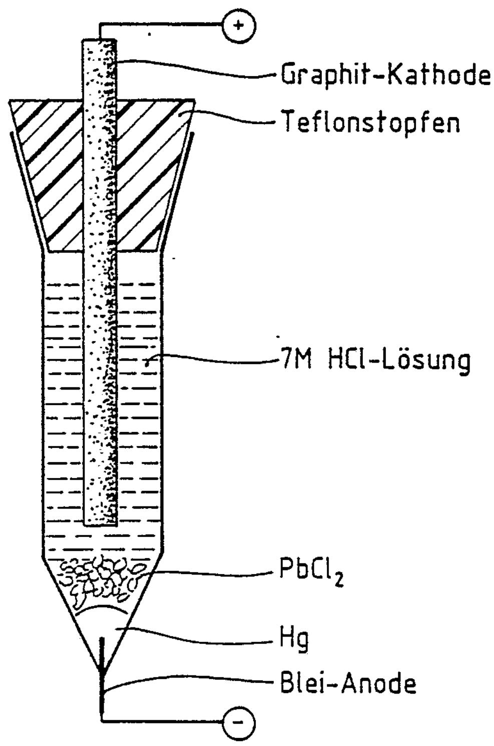


FIG. 1

EP 0 229 312 A2

Xerox Copy Centre

## Verfahren zur Speicherung von elektrischer Energie in einem photochemischen Element

Die Erfindung betrifft ein Verfahren zur Speicherung von elektrischer Energie in einem photochemischen Element, bei dem ein Metallhalogenid unter Energiezufuhr aufgespalten wird (Aufladung) und die Spaltprodukte wiedervereinigt werden unter Abgabe von elektrischer Energie (Entladung), sowie das photochemische Element, in dem von diesem Verfahren Gebrauch gemacht wird.

Verfahren zur Speicherung von elektrischer Energie in photochemischen Elementen, bei denen Lösungen von Metallhalogeniden unter Aufnahme elektrischer Energie auf elektrochemischem Wege gespalten und die Spaltprodukte unter Abgabe von elektrischer Energie wiedervereinigt werden, sowie photochemische Elemente, die auf solchen Verfahren basieren, sind bereits bekannt (vergl. z.B. DE-C-924 519).

Nachteilig an diesen bekannten Verfahren und photochemischen Elementen ist, daß ihr Wirkungsgrad den heutigen Anforderungen nicht mehr genügt und darüber hinaus aufgrund struktureller Veränderungen im Ruhezustand eine verlustfreie Speicherung von elektrischer Energie über längere Zeiträume hinweg nicht möglich ist.

Aufgabe der Erfindung war es daher, eine Methode zu entwickeln, mit deren Hilfe es möglich ist, elektrische Energie auf technisch einfachere und wirksamere Weise als bisher auch über längere Zeiträume hinweg möglichst verlustfrei in einem photochemischen Element zu speichern.

Entsprechende Untersuchungen haben gezeigt, daß zahlreiche Metallhalogenide in einem Milieu aus konzentrierten wässrigen Mineralsäuren sich in Gegenwart eines Katalysators unter der Einwirkung von Sonnenstrahlung und Nuklearstrahlung nach der folgenden Gleichung zersetzen :

$$(1)\ MX + h\nu \xrightarrow{Hg} M + 1/2\,X_2$$

worin

M ein beliebiges Metall des Periodischen Systems der Elemente (mit Ausnahme der Alkali-und Erdakalimetalle), vorzugsweise Blei (Pb) oder Silber (Ag), und

X ein Halogen, insbesondere Chlor (Cl), Brom (Br) oder Jod (J), bedeuten.

In einem photochemischen (galvanischen) Element vereinigen sich die Spaltprodukte der Lichtzersetzung gemäß der vorstehenden Gleichung (1) wieder gemäß der nachstehenden Anodenreaktion (A) und Kathodenreaktion (C), aus der sich die weiter unten angegebene Gesamtreaktion (2) ergibt:

$$(A)\ M - e \longrightarrow M^{1+}$$

$$(C)\ 1/2\ X_2 + e \longrightarrow 1/2\ X^{2-}$$

$$(2)\ M + 1/2\ X_2 \longrightarrow MX$$

Dabei liefert die Reaktion (2) das Material fur die Reaktion (1), die ihrerseits das Material für die Reaktion -(2) ergibt.

Gegenstand der Erfindung ist ein Verfahren zur Speicherung von elektrischer Energie in einem photochemischen (galvanischen) Element durch Aufspaltung eines Metallhalogenids unter Energiezufuhr (Aufladung) und Wiedervereinigung seiner Spaltprodukte unter Abgabe von elektrischer Energie -(Entladung), das dadurch gekennzeichnet ist, daß die Aufladung in der Weise erfolgt, daß ein Metallhalogenid in einer wässrigen konzentrierten Mineralsäurelösung in Gegenwart eines Katalysators mit Sonnenlicht oder Nuklearstrahlung bestrahlt wird.

Nach dem erfindungsgemäßen Verfahren ist es auf technisch einfache und wirksame Weise möglich, elektrische Energie auch uber längere Zeiträume hinweg verlustfrei in photochemischen (galvanischen) Elementen zu speichern.

Gemäß einer bevorzugten Ausgestaltung der Erfindung verwendet man als Metallhalogenid ein Chlorid, Bromid oder Jodid eines beliebigen Metalls des Periodischen Systems der Elemente mit Ausnahme der Alkali-und Erdalkalimetalle, wobei die Verwendung von Bleichlorid vom wirtschaftlichen Standpunkt aus betrachtet besonders bevorzugt ist.

Als konzentrierte wässrige Mineralsäure können alle Mineralsäuren einzeln oder Mischungen davon, mit Ausnahme der Salpetersäure, verwendet werden, wobei die Verwendung von konzentrierter Chlorwasserstoffsäure besonders bevorzugt ist. Die optimale Konzentration der Mineralsäure liegt bei etwa 7-molar.

Als Katalysator verwendet man erfindungsgemäß vorzugsweise elementares Quecksilber und seine festen und flüssigen Amalgame, insbesondere die Amalgame des Quecksilbers mit Silber (Ag), Wismut (Bi), Cadmium (Cd), Kupfer (Cu), Zinn (Sn), Gallium (Ga), Indium (In), Blei (Pb), Thallium (Tl) und den übrigen Edelmetallen.

Hierbei ist zu bemerken, daß beispielsweise im Falle eines galvanischen Elements [Pb/$PbCl_2$, Hg, HCl/C] ein flüssiges oder festes Bleiamalgam verwendet werden muß, während für ein galvanisches Element [Ag/AgCl, Hg, HCl/C], ein Silberamalgam verwendet werden muß.

Was die Menge des erfindungsgemäß einzusetzenden Quecksilbers oder Quecksilberamalgams angeht, sei darauf hingewiesen, daß in den weiter unten beschriebenen Ausführungsbeispielen jeweils 1 ml Quecksilber verwendet wurde, was in Hinblick auf das hohe spezifische Gewicht von 13,5 g/$cm^3$ eine große Gewichtsmenge darstellt. Es kann aber auch eine amalgamierte Elektrode aus beispielsweise Pb(Hg) verwendet werden, in der das Hg nur etwa 1,3% des Elektrodengewichts ausmacht.

Gegenstand der Erfindung ist ferner ein photochemisches (galvanisches) Element, das auf dem vorgenannten Verfahren zur Speicherung von elektrischer Energie basiert und gekennzeichnet ist durch eine Kathode, eine konzentrierte wässrige Mineralsäure als Elektrolyt, ein Metallhalogenid, das mit elementarem Quecksilber oder einem seiner festen oder flussigen Amalgame in Kontakt steht, und eine Anode.

Als Kathode verwendet man vorzugsweise eine Graphit-oder Kohle-Elektrode, und die Anode besteht vorzugsweise aus Silber oder Blei und steht in Kontakt mit dem Katalysator (Quecksilber oder Quecksilberamalgam ).

Der Elektrolyt besteht vorzugsweise aus einer wässrigen konzentrierten Mineralsäurelösung oder einer Mischung von Mineralsäurelösungen mit Ausnahme der Salpetersäure, insbesondere aus einer wässrigen konzentrierten Chlorwasserstoffsäurelösung, besonders bevorzugt aus einer 5 bis 13-molaren konzentrierten Chlorwasserstoffsäurelösung. Die optimale Konzentration liegt bei etwa 7 M.

Als Metallhalogenid wird ein Halogenid, instesondere ein Chlorid, Bromid oder Jodid, eines beliebigen Metalls des Periodischen Systems der Elemente mit Ausnahme der Alkali-und Erdalkalimetalle, besonders bevorzugt $PbCl_2$ oder AgCl, verwendet.

Als Katalysator, der mit dem Metallhalogenid in Kontakt steht, werden erfindungsgemäß vorzugsweise elementares Quecksilber und seine festen und flüssigen Amalgame verwendet, insbesondere die Amalgame mit Ag, Bi, Cd, Cu, Sn, Ga, In, Pb, Tl und Edelmetallen.

Die jeweils geeignete und bevorzugte Dauer, Intensität und Wellenlänge der Bestrahlung, insbesondere der Sonnen-und Nuklearstrahlung, können vom Fachmann anhand geeigneter Vorversuche leicht ermittelt werden.

In den beiliegenden Zeichnungen sind zwei beispielhafte photochemische (galvanische) Elemente gemäß der vorliegenden Erfindung schematisch dargestellt, die sich im eingesetzten Metallhalogenid und dem Anodenmaterial voneinander unterscheiden.

Beide Zeichnungen zeigen einen Flüssigkeitsbehälter, der beispielsweise mit einer wässrigen konzentrierten Chlorwasserstoffsäurelösung (z.B. 7-molar) als Elektrolyt gefüllt ist. Der Flussigkeitsbehälter ist an seinem oberen Ende verschlossen, beispielsweise mit einem Teflon-Stopfen, der eine zentrale Öffnung aufweist, in der sich eine stab-oder plattenförmige Elektrode (Kathode), beispielsweise aus Graphit, befindet, die in die Elektrolytflüssigkeit hineinragt. Am unteren, verschlossenen Ende des Flüsigkeitsbehälters befinden sich die Anode, z.B. eine Blei-oder Silberanode, ein Metallhalogenid-Granulat, vorzugsweise Bleichlorid-oder Silberchlorid-Granulat, und das damit in Kontakt stehende elementare Quecksilber.

Die Erfindung wird durch die folgenden Beispiele näher erläutert, ohne jedoch darauf beschränkt zu sein.

Beispiel 1 : Photochemisches (galvanisches) Element [Pb/$PbCl_2$, Hg, 7M HCl/C] (gemäß Fig. 1)

Herstellung des Bleichlorids ($PbCl_2$)

Reagentien : $Pb(NO_3)_2$

wässrige 2M $HNO_3$-Lösung

wässrige konzentrierte HCl-Lösung (ca. 13-molar)

wässrige 7M HCl-Lösung

destilliertes Wasser

elementares Quecksilber

10 g $Pb(NO_3)_2$, die in einem Erlenmayer-Kolben enthalten sind, werden in der minimalen Menge 2M $HNO_3$-Lösung aufgelöst. Zu dieser Lösung gibt man innerhalb von höchstens 30 Sekunden ohne Rühren 30 ml konzentrierter Chlorwasserstoffsäure zu. Man trennt die wässrige Phase von dem entstandenen Niederschlag durch Dekantieren, wäscht den Niederschlag einmal mit 50 ml 7M Chlorwasserstoffsäure-Lösung und eliminiert ihn anschließend durch Dekantieren.

Zu dem $PbCl_2$-Niederschlag gibt man 100 ml 7M HCl-Lösung und einige Tropfen Quecksilber zu. Das Ganze wird dann mit Sonnenlicht bestrahlt. Die Photolyse des $PbCl_2$ beginnt schon nach wenigen Minuten.

Photochemische (galvanische) Zelle

Elektroden : Pb-Anode

Graphit-oder Kohle-Kathode

Die an einem geeigneten Stopfen fixierte Elektrode (C-Kathode) wird in den Erlenmayer-Kolben eingefuhrt, wobei ein Kontakt zwischen der C-Kathode und dem elementaren Quecksilber vermieden wird.

Bei Beginn der Photolyse stabilisiert sich die Potentialdifferenz auf einen Wert von 1,5 Volt und dieser Wert wird über mehrere Monate hinweg beibehalten.

Beispiel 2 : Photochemisches (galvanisches) Element [Ag/AgCl, Hg, 7M HCl/C] (gemäß Fig. 2)

Herstellung von AgCl

Reagentien : $AgNO_3$

wässrige konzentrierte HCl-Lösung (13-molar)

wässrige 7M HCl-Lösung

destilliertes Wasser

Hg

10 g $AgNO_3$, die in einem Erlenmayer-Kolben enthalten sind, werden in einer minimalen Menge destillierten Wassers gelöst. Zu dieser Lösung gibt man innerhalb von höchstens 30 Sekunden ohne Rühren 30 ml konzentrierter Chlorwasserstoffsäure zu. Man trennt die wässrige Phase von dem entstandenen Niederschlag durch Dekantieren, wäscht den Niederschlag einmal mit 50 ml 7M Chlorwasserstoffsäure-Lösung und eliminiert ihn anschließend durch Dekantieren.

Zu dem AgCl-Niederschlag gibt man 100 ml 7M HCl-Lösung und einige Tropfen Quecksilber zu. Das Ganze wird dann mit Sonnenlicht bestrahlt. Die Photolyse des AgCl beginnt schon nach wenigen Minuten.

Photochemisches (galvanisches) Element

Elektroden : Ag-Anode

Graphit-oder Kohle-Kathode

Die C-Elektrode (Kathode) wird in geeigneter Weise in die Elektrolytflüssigkeit in dem Kolben eingetaucht, wobei ein Kontakt zwischen der C-Elektrode und dem elementaren Quecksil ber vermieden wird.

Bei Beginn der Photolyse des AgCl stabilisiert sich die Potentialdifferenz auf einen Wert von 1,4 Volt und behält diesen Wert über mehrere Monate hinweg bei.

## Ansprüche

1. Verfahren zur Speicherung von elektrischer Energie in einem photochemischen Element durch Aufspaltung eines Metallhalogenids unter Energiezufuhr (Aufladung) und Wiedervereinigung seiner Spaltprodukte unter Abgabe von elektrischer Energie (Entladung), dadurch **gekennzeichnet**, daß die Aufladung in der Weise erfolgt, daß ein Metallhalogenid in einer wässrigen konzentrierten Mineralsäurelösung in Gegenwart eines Katalysators mit Sonnenlicht oder Nuklearstrahlung bestrahlt wird.

2. Verfahren nach Anspruch 1, dadurch gekennzeichnet, daß als Metallhalogenid ein Chlorid, Bromid oder Jodid von Blei oder Silber verwendet wird.

3. Verfahren nach Anspruch 1 oder 2, dadurch gekennzeichnet, daß als Mineralsäure konzentrierte Chlorwasserstoffsäure verwendet wird.

4. Verfahren nach einem der Ansprüche 1 bis 3, dadurch gekennzeichnet, daß als Katalysator elementares Quecksilber oder ein Amalgam von Quecksilber mit Ag, Bi, Cd, Cu, Sn, Ga, In, Pb, Tl oder einem Edelmetall verwendet wird.

5. Photochemisches Element, gekennzeichnet durch eine Kathode, eine konzentrierte wässrige Mineralsäure als Elektrolyt, ein Metallhalogenid, das mit einem elementaren Metall, insbesondere elementarem Quecksilber,oder einem seiner festen oder flüssigen Amalgame in Kontakt steht, und eine Anode.

6. Element nach Anspruch 5, dadurch gekennzeichnet, daß es sich bei der Kathode um eine Graphit- oder Kohle-Elektrode handelt.

7. Element nach Anspruch 5 oder 6, dadurch gekennzeichnet, daß es sich bei der Mineralsäure um Chlorwasserstoffsäure handelt.

8. Element nach einem der Ansprüche 5 bis 7, dadurch gekennzeichnet, daß es sich bei dem Metallhalogenid um ein Chlorid, Bromid oder Jodid von Blei oder Silber handelt.

9. Element nach einem der Anspruche 5 bis 8, dadurch gekennzeichnet, daß es sich bei dem elementaren Metall um elementares Quecksilber handelt.

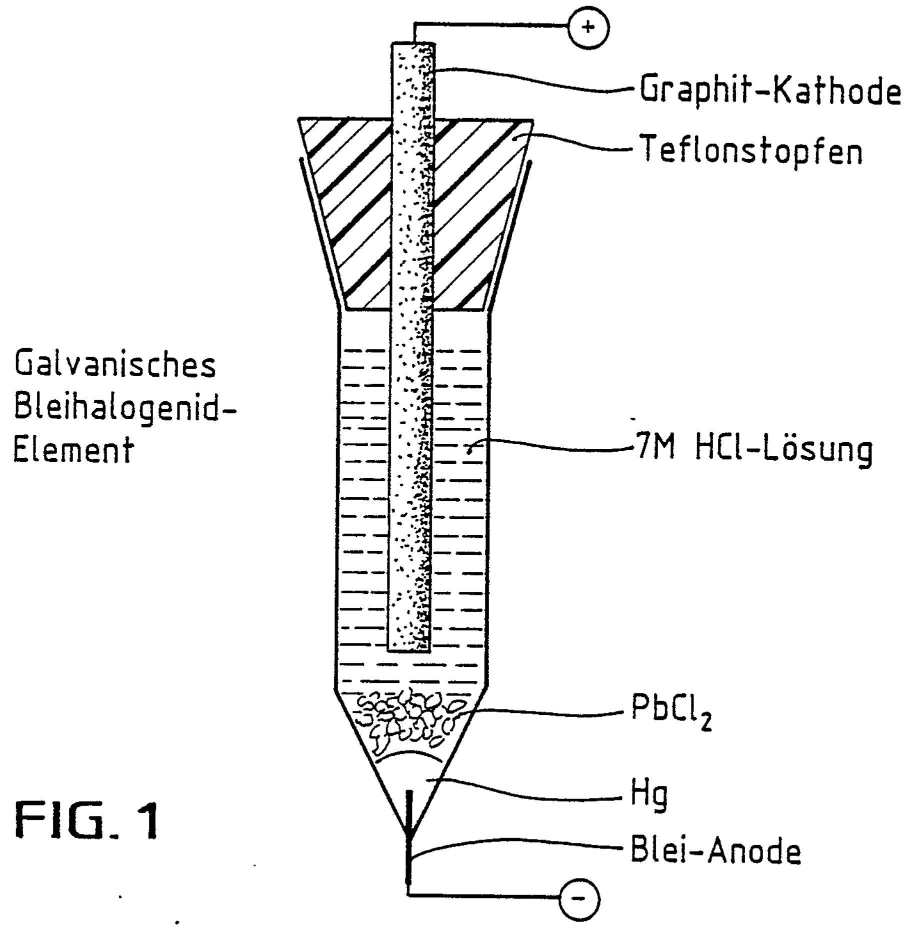
Graphit-Kathode
Teflonstopfen
Galvanisches
Bleihalogenid-
Element
7M HCl-Lösung
$PbCl_2$
Hg
Blei-Anode

FIG. 1

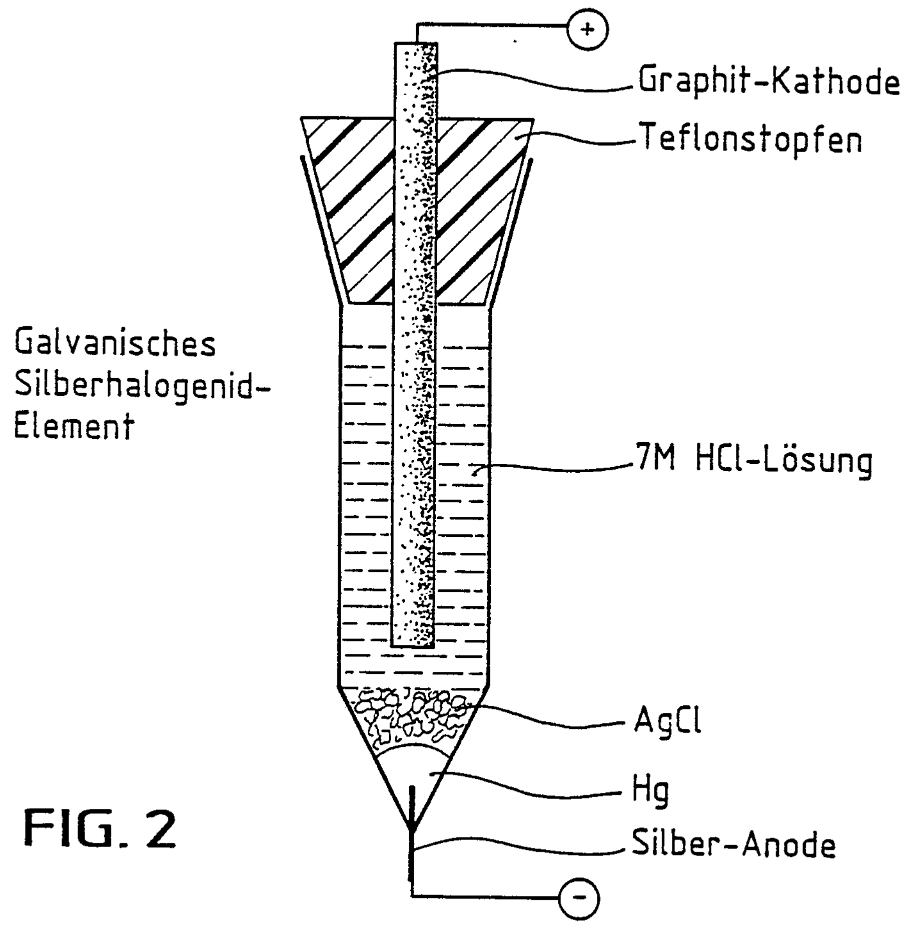
Graphit-Kathode
Teflonstopfen
Galvanisches
Silberhalogenid-
Element
7M HCl-Lösung
AgCl
Hg
Silber-Anode

FIG. 2